# EUROPEAN PATENT SPECIFICATION

(11) **EP 2 487 523 B1**
(45) Date of publication and mention of the grant of the patent: **18.06.2014**
(21) Application number: 11175594.8
(22) Date of filing: 27.07.2011
(51) Int. Cl.: G02B 27/22, G06F 3/044, G06F 3/048, H04N 13/04, G02F 1/1333

(54) **Image display apparatus and method thereof**
Bildanzeigevorrichtung und Verfahren dafür
Appareil d'affichage d'images et son procédé

(30) Priority: 29.07.2010 KR 20100073199
(43) Date of publication of application: 15.08.2012
(73) Proprietor: Pantech Co., Ltd., Seoul 121-792 (KR)
(72) Inventor: Seok, Jin Woo, 121-792 Seoul (KR)
(74) Representative: Herzog, Markus

(56) References cited:
- WO-A1-2009/069358
- US-A1- 2007 279 391
- US-A1- 2008 314 626
- US-A1- 2009 160 817

## Description

### CROSS-REFERENCE TO RELATED APPLICATION

This application claims priority from and the benefit under 35 U.S.C. 119 of Korean Patent Application No. 10-2010-00073199, filed on July 29, 2010.

### BACKGROUND

FIELD

This disclosure relates to a stereographic image display, and more particularly, to a stereographic image display apparatus having a touch function and a manufacturing method thereof.

DISCUSSION OF THE BACKGROUND

An autostereographic image technology may be implemented using a parallax phenomenon, which relies on a person's two eyes viewing a display in a different manner. In order to utilize parallax, a display element has an ability to display a pixel for the left eye and the right eye distinctly. This may be implemented by using an image filter for individually displaying a left eye image and a right eye image. Specifically, the image filter may be implemented with autostereographic images, a parallax barrier, a lenticular lens, and the like.

In the case of a stereographic method utilizing a lenticular lens, a lenticular lens is disposed on a display through which an image is viewed such that a pixel line for the left eye and a pixel line for the right eye are alternately arranged in a direction. The lenticular lens may then be used to display a left eye image and a right eye image using a light refraction phenomenon, thus providing stereographic effects. A stereographic image display of the prior art is disclosed in US-A-2010/0321621.

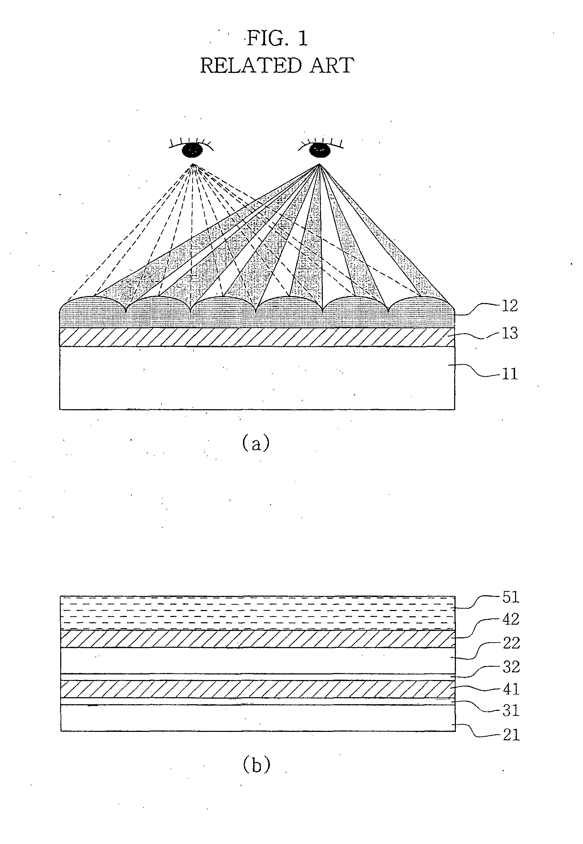

FIG. 1 (a) is a diagram illustrating a stereographic image method using a lenticular lens.

Referring to FIG. 1 (a), the display element 11 and a lenticular lens 12 are adhered to an optically clear adhesive (OCA) 13 disposed therebetween. The lenticular lens 12 allows for a right and left eye to see different images.

FIG. 1 (b) is a diagram schematically illustrating a cross-sectional structure of a capacitive touchscreen.

The touch screen mainly includes two transparent films 21 and 22 on which transparent electrode layers 31 and 32 are deposited, respectively, and a protection film 51. The transparent films 21 and 22 are adhered through optically clear adhesives 41 and 42.

There are numerous disadvantages to providing autostereographic images and a touch screen together. If the touchscreen is attached to the autostereographic image display, image quality degradation occurs, and there are problems caused by the thickness of the entire display apparatus being increased. Further, material costs and manufacturing costs are increased.

### SUMMARY

The following description relates to an image display apparatus and method thereof according to various embodiment contained herein.

An exemplary embodiment provides for an image display apparatus, including an image display unit which includes pixels in a matrix form and in which a pixel for the left eye and a pixel for the right eye are arranged alternately in each pixel; and a touch sensing unit positioned on the image display unit, the touch sensing unit comprises: a lens array interposed between a first transparent electrode layer and a second transparent electrode layer that intersect each other, wherein the touch sensing unit senses a touch or touch position by the first transparent electrode layer and the second transparent electrode layer, and separates an image output from the image display unit through the lens array into a left eye image and a right eye image based on a refractive index of light.

Another exemplary embodiment provides a manufacturing method of a stereographic image display apparatus including disposing a transparent conductive material on opposing sides of a lens array; forming a first transparent electrode layer and a second transparent electrode layer by etching the transparent conductive material deposited on the lens array to generate a touch sensing unit; and adhering the touch sensing unit to an image display unit.

Another exemplary embodiment provides a 3D image display apparatus, including a lens array with pixels for a right eye image and a left eye image, to separate an image output from the image display unit with a refractive index of light for the right eye image and the left eye image; a first transparent electrode layer disposed on a first side of the lens array; a second transparent electrode layer disposed on a second side of the lens array, wherein the first transparent electrode and the second transparent electrode are disposed in directions to intersect with each other and configured to sense a touch.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1(a) is a diagram illustrating a structure of a stereographic image display according to the related arts.

FIG. 1(b) is a diagram illustrating a structure of a touch screen according to the related arts.

FIG. 2 is a perspective view of a stereographic display apparatus according to an exemplary embodiment.

FIG. 3 is a cross-sectional view illustrating an I-I' section of a stereographic display apparatus according to an exemplary embodiment.

FIG. 4 is a cross-sectional view schematically illustrating a stereographic image display apparatus according to an exemplary embodiment.

FIG. 5A, FIG. 5B, FIG. 5C and FIG. 5D are diagrams illustrating a manufacturing of a stereographic image display apparatus according to an exemplary embodiment.

### DETAILED DESCRIPTION

Exemplary embodiments now will be described more fully hereinafter with reference to the accompanying drawings, in which exemplary embodiments are shown. This disclosure may, however, be embodied in many different forms and should not be construed as limited to the exemplary embodiments set forth therein. Rather, these exemplary embodiments are provided so that this disclosure will be thorough and complete, and will fully convey the scope of this disclosure to those skilled in the art. In the description, details of well-known features and techniques may be omitted to avoid unnecessarily obscuring the presented embodiments. It is to be understood that if an element is described as being "disposed on" another element, it may be disposed directly on the other element or intervening elements may be present.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals in the drawings denote like elements. The shape, size and regions, and the like, of the drawing may be exaggerated for clarity.

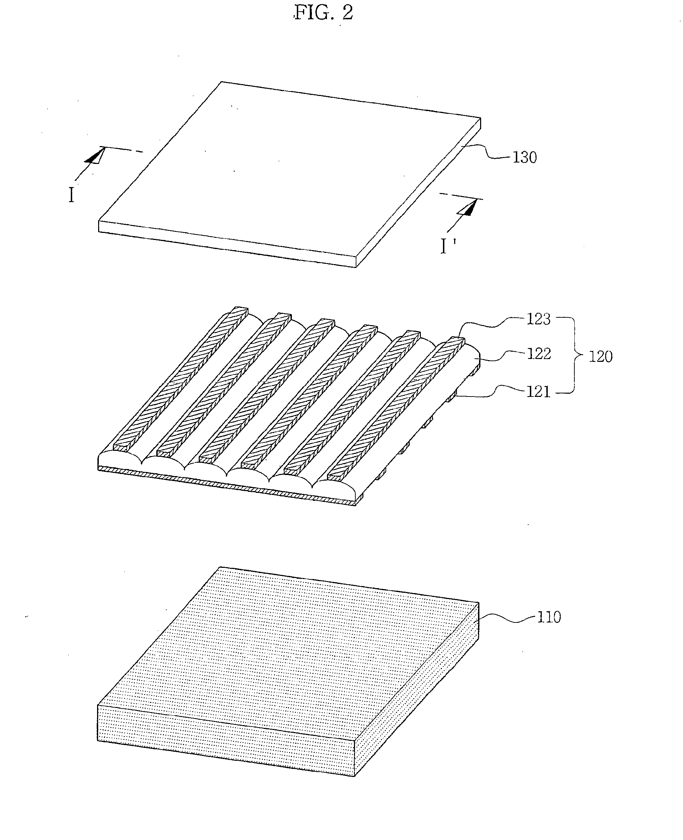

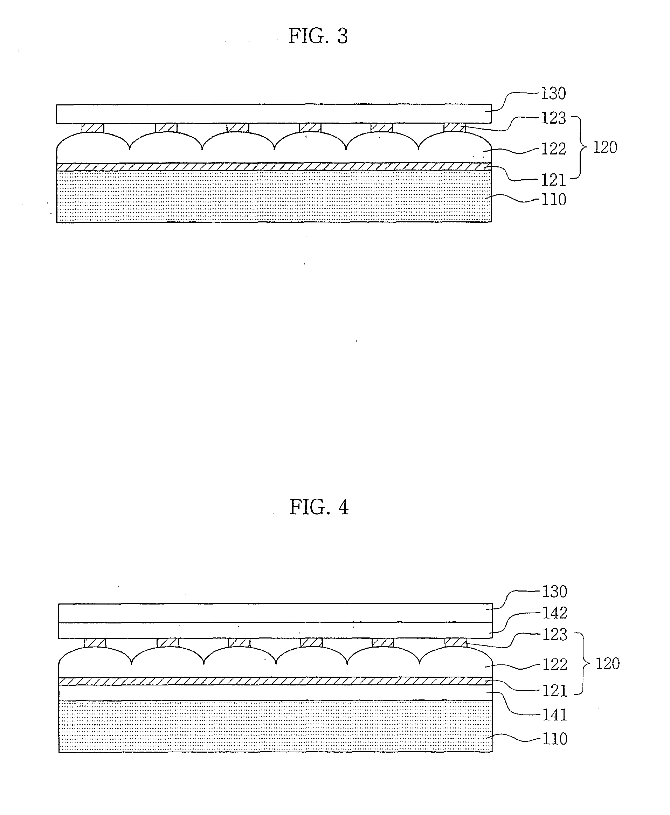

FIG. 2 is an exploded perspective view of a stereographic display apparatus according to an exemplary embodiment. FIG. 3 is a cross-sectional view illustrating an I-I' section of FIG. 2. FIGS. 2 and 3 illustrate a structure in which a display element for a stereographic image and a touchscreen function are integrated.

The stereographic display apparatus according to an exemplary embodiment includes an image display unit 110 to output an image, a lens array 122 to separate the image output from the image display unit 110 in a left eye direction and a right eye direction, first and second transparent electrode layers 121 and 123 disposed on both surfaces of the lens array 122, and a protection layer 130.

The image display unit 110, the lens array 122 on which the first and second transparent electrode layers 121 and 123 are disposed, and the protection layer 130 are directly adhered. However, aspects of the present invention are not limited thereto such that intervening layers may be present between any of the layers 110, 121, 122, 123 and 130. The adhering process may be performed using heat, pressure, and the like without additional adhesives being used, as illustrated. The first transparent electrode layer 121 is disposed on one side of a touch sensing unit 120 and is adhered to the image display unit 110, and the protection layer 130 is adhered to the second transparent electrode layer 123 formed at a second side of the touch sensing unit 120. If the use of optically clear adhesives is minimized and corresponding layers are removed, the thickness of the entire apparatus can be reduced, material costs can be reduced, and image quality degradation due to the optically clear adhesives may be avoided.

The image display unit 110 may be a display such as a liquid crystal display (LCD) panel or an organic light emitting diode (OLED) panel and may include pixels in a matrix form. In the image display unit 110, a pixel line for the left eye and a pixel line for the right eye may intersect in various directions, with each pixel including at least a pixel for the left eye and a pixel for the right eye arranged alternately with each other. The image display unit 110 outputs a separate image through each of the pixel for the left eye and the pixel for the right eye, and thus allows the two eyes to see different images and to perceive the different images, causing the two eyes to see a stereographic image.

The lens array 122 is disposed on the image display unit 110. The lens array 122 provides an autostereographic image and may be a convex lens type or a concave lens type lenticular lens, or the like.

The lens array 122 may be an image filter of an optical structure using a light refraction phenomenon that displays the left eye image and the right eye image by separating the images input to the lens array 122 from the image display unit 110 into left and right side images based on the refractive index of light. Due to the lens array 122 using light refraction, the lens array 122 may be designed in consideration of various factors, including the pixels for the left eye and the pixels for the right eye of the image display unit 110, the size and shape of the lens, distances, and the like.

The hemispheres of the lenses of the lens array 122 are aligned with the pixels for the left eye and the pixels for the right eye of the image display unit 110 and positioned so that the left eye image and the right eye image are separated through each lens of the lens array 122 into a stereographic image. A focal region in which a stereographic image is seen is formed by changing the transmittance of light using a fixed hemispheric lens. For this, the image display unit 110 separately operates the display of a pixel for the left eye and the pixel for the right eye, thereby producing images contents separately produced for stereographic images for each eye. In a case of displaying a 2D image, such as text, which does not require a stereographic image, the same image may be displayed on the pixel for the left eye and the pixel for the right eye.

The lens array 122, the first transparent electrode layer 121, and the second transparent electrode layer 123 are disposed on the image display unit 110 and collectively compose the touch sensing unit 120. The touch sensing unit 120 may filter the image to separate the image output from the image display unit 110 into images for the left eye and for the right image based on the refractive index of light, and provide touchscreen functionality.

The touch sensing unit 120 may be an integrated structure in which the lens array 122 is disposed between the first and second transparent electrode layers 121 and 123. The images output from the image display unit 110 are separated for the left eye and right eye directions based on the refractive index of light through the lens array 122.

The touch sensing unit 120 may be a capacitive touchscreen in which the first and second transparent electrode layers 121 and 123, are disposed irrespective of the first and second sides of the translucent lens array 122. In this case, the touch sensing unit 120 senses a touch position by sensing changes in static electricity and current between the first and second transparent electrode layers 121 and 123, which are deformed when touched to change an interval by which the first and second transparent electrode layers 121 and 123 are separated. The first and second transparent electrode layers 121 and 123 may be formed into a matrix pattern (or in a perpendicular orientation) to determine a touch, and touch position of the touch, on the touch sensing unit 120. For example, the pattern of the first transparent electrode layer 121 is formed in a first direction, and the pattern of the transparent electrode layer 123 may be formed in a second direction that crosses the first direction.

The protection layer 130 may be a protection film or a protection glass to cover a side of the touch sensing unit 120, and may be maintained at a specific height so as not to deform or break the outer shapes of the lens hemispheres on the lens array 122 when pressed by a pressure exerted during a touch input.

According to exemplary embodiments, the touch sensing unit 120 may be attachable to a display device such that the touch sensing unit 120 may be attached or detached according to a user's requirement.

The touch sensing unit 120 may implement the integrated structure by depositing a transparent conductive material on and under the lens array 122. In this structure, the use of a transparent film and/or an optically clear adhesive as a supporting material of the transparent conductive material on the touchscreen may be omitted or reduced. In addition, due to the above reasons, since the transparent film and the optically clear adhesive for attaching it are omitted, the thickness of the entire apparatus can be reduced, and material costs may be reduced, and the transmittance may be enhanced, thereby providing a high quality image. In addition, the manufacturing process can be simplified, thereby minimizing defects.

FIG. 4 is a cross-sectional view schematically illustrating a stereographic image display apparatus according to an exemplary embodiment.

In FIG. 4, a structure in which the image display unit 110 is adhered to the touch sensing unit 120 including the lens array 122 by first and second optically clear adhesive layers 141 and 142 made of optically clear adhesives in a similar structure as illustrated in FIGS. 2 and 3 is illustrated. The first transparent electrode layer 121 disposed on a first side of the touch sensing unit 120 is adhered to the image display unit 110 through the first optically clear adhesive layer 141, and the second transparent electrode layer 123 disposed on a second side of the touch sensing unit 120 is adhered to the protection layer 130 by the second optically clear adhesive layer 142.

As shown in FIGS. 2 to 4, the lens array 122 and the first and second transparent electrode layers 121 and 123 may be integrated, thereby reducing the number of layers. In addition, due to the exclusion of a transparent film, advantages such as a reduction in the thickness of the entire apparatus, a reduction in material cost, and improvement of image degradation due to the transparent film may be achieved.

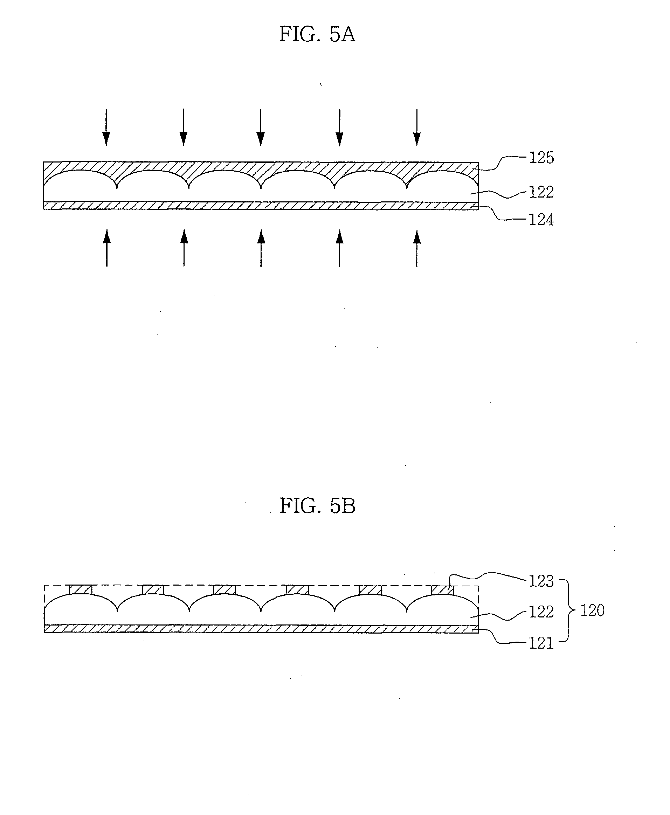

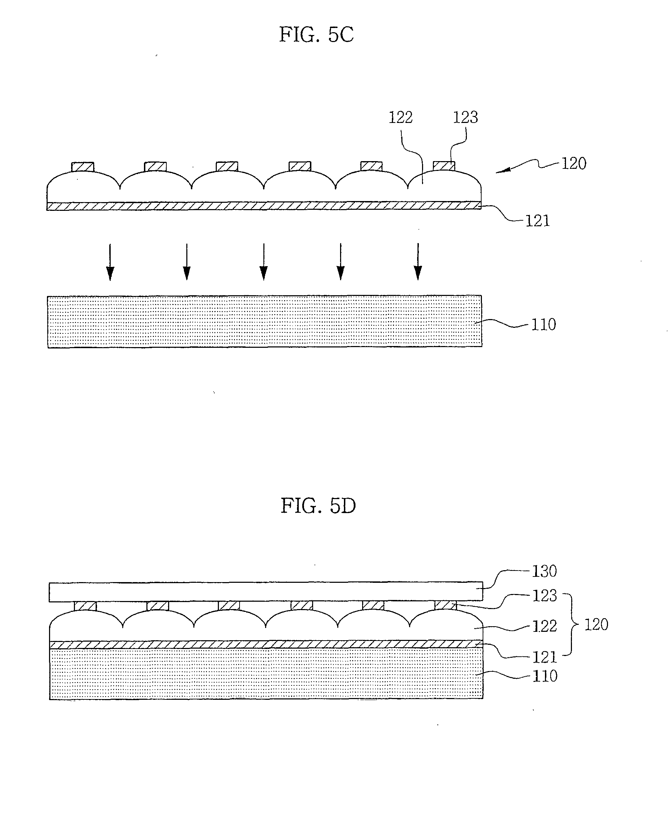

FIG. 5A, FIG. 5B, FIG. 5C and FIG. 5D are diagrams illustrating a manufacturing of a stereographic image display apparatus according to an exemplary embodiment.

As illustrated in FIG. 5A, transparent conductive materials 124 and 125 are subjected to vacuum deposition to be formed as thin films on the both surfaces of the lens array 122. The conductive materials may be formed of or include indium tin oxide (ITO), indium zinc oxide (IZO), or the like.

Thereafter, as illustrated in FIG. 5B, the first and second transparent electrode layers 121 and 123 are formed by etching the transparent conductive materials 124 and 125 deposited on the both surfaces of the lens array 122. This may be done through the process exemplified in FIG. 5A, thereby sequentially disposing the first transparent electrode 121, the lens array 122, and the second transparent electrode layer 123. Accordingly, the touch sensing unit 120 having an integrated image filter and capacitive touchscreen may be realize. The first and second transparent electrode layers 121 and 123 may be formed into a matrix pattern (or in perpendicular orientation) to determine a touch, and a position of the touch, on the touch sensing unit 120. For example, the pattern of the first transparent electrode layer 121 may be formed in a first direction, and the pattern of the transparent electrode layer 123 may be formed in a second direction disposed to cross the first direction.

As illustrated in FIG. 5C, the touch sensing unit 120 is adhered to a surface of the image display unit 110. As illustrated in FIG. 5D, the protection layer 130 is disposed on the touch sensing unit 120 opposite the image display unit 110. However aspect are not limited thereto such that the protection layer 130 may be removed or replaced with other materials.

The image display unit 110, the touch sensing unit 120, and the protection layer 130 may be directly adhered using heat, pressure, and the like without use of the optically clear adhesives or may be adhered using optically clear adhesives. If the optically clear adhesive is used as a material for interlayer adhesion, as illustrated in FIG. 4, the upper surface of the image display unit 110 may be adhered to the touch sensing unit 120 using the first optically clear adhesive layer 141, and the protection layer 130 may be adhered to the upper surface of the touch sensing unit 120 using the second optically clear adhesive layer 142.

It will be apparent to those skilled in the art that various modifications and variation can be made in the present invention. Thus, it is intended that the present invention cover the modifications and variations of this invention provided they come within the scope of the appended claims.
Provided are a stereographic image display apparatus and a manufacturing method thereof. The stereographic image display apparatus includes an image display unit and a touch sensing unit which is positioned on the image display unit and is configured to interpose a lens array between a first transparent electrode layer and a second transparent electrode layer. The manufacturing method of the stereographic image display apparatus includes: allowing a transparent conductive material to be deposited on both surfaces of a lens array; forming first and second transparent electrode layers by etching the transparent conductive material deposited on the both surfaces of the lens array thereby generating a touch sensing unit; and adhering the touch sensing unit to an upper surface of an image display unit.

## Claims

1. An image display apparatus, comprising:
an image display unit (110) including a plurality of pixels in a matrix form, the pixels comprising a sub-pixel for the left eye and a sub-pixel for the right eye; **characterised in that**:
a first transparent electrode layer (121) and a second transparent electrode layer (123) positioned on the image display unit (110), the first transparent electrode layer (121) and the second transparent electrode layer (123) being disposed to cross each other, and being adapted to sense at least one of a touch and a touch position; and
a lens array (122) disposed between the first transparent electrode layer (121) and the second transparent electrode layer (123) adapted to separate an image output from the image display unit (110) into a left eye image composed by the sub-pixels for the left eye and a right eye image composed by the sub-pixels for the right eye based on a refractive index of the lens array.

2. The apparatus according to claim 1, wherein the first transparent electrode layer (121), the lens array (122) and the second transparent electrode layer (123) together form a touch sensing unit (120) positioned on the image display unit.

3. The apparatus according to claim 1 or 2, wherein the first transparent electrode layer (121) is directly adhered to a lower side of the lens array (122), and a protection layer (130) is adhered to the second transparent electrode layer (123).

4. The apparatus according to claim 1 or 2, further comprising:
a protection layer (130) disposed on a side of second transparent electrode layer (123) opposite a side of the second transparent electrode layer that faces the lens array (122);
a first optically clear adhesive layer (141) adhering the first transparent electrode layer to the image display unit; and
a second optically clear adhesive layer (142) adhering the protection layer (130) to the second transparent electrode layer (123).

5. The apparatus according to any claims 1 to 4, wherein the lens array (122) comprises a lenticular lens.

6. The apparatus according to any of claims 2 to 5, wherein the touch sensing unit (120) is attachable and detachable from the image display unit (110).

7. A manufacturing method of a stereographic image display apparatus comprising:
disposing a transparent conductive material (124,125) on opposing sides of a lens array;
disposing a first transparent electrode layer (121) and a second transparent electrode layer (123) by etching the transparent conductive material deposited on the lens array to generate a touch sensing unit; and
adhering the touch sensing unit (120) to an image display unit (110).

8. The manufacturing method according to claim 7, wherein the lens array (122) includes a lenticular lens, which separates an image output from the image display unit based on a refractive index of the lens array into a left eye image and a right eye image.

9. The manufacturing method according to claim 7 or 8, wherein the image display unit comprises a matrix of pixels, and
a sub-pixel for the left eye image and a sub-pixel for the right eye image are arranged alternately in each of the pixels.

10. The manufacturing method according to any of claims 7 to 9, further comprising:
adhering the image display unit (110) and the touch sensing unit (120) with an optically clear adhesive layer.

11. The manufacturing method according to any of claims 7 to 10, further comprising:
adhering a protection layer (130) to an upper surface of the touch sensing unit with an optically clear adhesive layer.

12. The manufacturing method according to any of claims 7 to 11, wherein the first transparent electrode layer (121) and the second transparent electrode layer (123) are disposed to cross each other.

## Patentansprüche

1. Bildanzeigevorrichtung, umfassend:
eine Bildanzeige-Einheit (110), umfassend eine Mehrzahl von Pixeln in einer Matrix-Form, wobei die Pixel einen Sub-Pixel für das linke Auge und einen Sub-Pixel für das rechte Auge umfassen;
**dadurch gekennzeichnet, dass**
eine erste transparente Elektrodenschicht (121) und eine zweite transparente Elektrodenschicht (123) auf der Bildanzeige-Einheit (110) positioniert sind, wobei die erste transparente Elektrodenschicht (121) und die zweite transparente Elektrodenschicht (123) dazu angeordnet sind, einander zu kreuzen, und dazu eingerichtet sind, wenigstens eines aus einer Berührung und einer Berührungsposition zu sensieren; und
eine Linsen-Anordnung (122), welche zwischen der ersten transparenten Elektrodenschicht (121) und der zweiten transparenten Elektrodenschicht (123) angeordnet ist, welche dazu eingerichtet ist, eine Bildausgabe von der Bildanzeige-Einheit (110) in ein Bild für das linke Auge, welches aus den Sub-Pixeln für das linke Auge zusammengesetzt ist, und ein Bild für das rechte Auge, welches aus den Sub-Pixeln für das rechte Auge zusammengesetzt ist, auf Grundlage eines Brechungindexes der Linsen-Anordnung aufzuteilen.

2. Vorrichtung nach Anspruch 1, wobei die erste transparente Elektrodenschicht (121), die Linsen-Anordnung (122) und die zweite transparente Elektrodenschicht (123) zusammen eine Berührungs-Sensierungs-Einheit (120) bilden, welche an der Bildanzeigevorrichtung positioniert ist.

3. Vorrichtung nach Anspruch 1 oder 2, wobei die erste transparente Elektrodenschicht (121) direkt an einer Unterseite der Linsen-Anordnung (122) haftet, und eine Schutzschicht (130) an der zweiten transparenten Elektrodenschicht (123) haftet.

4. Vorrichtung nach Anspruch 1 oder 2, ferner umfassend:
eine Schutzschicht (130), welche an einer Seite der zweiten transparenten Elektrodenschicht (123) angeordnet ist, gegenüber einer Seite der zweiten transparenten Elektrodenschicht, welche der Linsen-Anordnung (122) zugewandt ist;
eine erste optisch klare Haftschicht (141), welche die erste transparente Elektrodenschicht an die Bildanzeigevorrichtung anhaftet; und
eine zweite optisch klare Haftschicht (142), welche die Schutzschicht (130) an die zweite transparente Elektrodenschicht (123) anhaftet.

5. Vorrichtung nach einem der Ansprüche 1 bis 4, wobei die Linsen-Anordnung (122) eine lentikulare Linse umfasst.

6. Vorrichtung nach einem der Ansprüche 2 bis 5, wobei die Berührungs-Sensierungs-Einheit (120) mit der Bildanzeigevorrichtung (110) verbindbar und von dieser lösbar ist.

7. Herstellungsverfahren einer stereographischen Bildanzeigevorrichtung, umfassend:
Anordnen eines transparenten leitfähigen Materials (124, 125) an gegenüberliegenden Seiten einer Linsen-Anordnung;
Anordnen einer ersten transparenten Elektrodenschicht (121) und einer zweiten transparenten Elektrodenschicht (123) durch Ätzen des an der Linsen-Anordnung angebrachten transparenten leitfähigen Materials, um eine Berührungs-Sensierungs-Einheit zu erzeugen; und
Anhaften der Berührungs-Sensierungs-Einheit (120) an eine Bildanzeige-Einheit (110).

8. Herstellungsverfahren nach Anspruch 7, wobei die Linsen-Anordnung (122) eine lentikulare Linse umfasst, welche eine Bildausgabe von der Bildanzeige-Einheit auf Grundlage eines Brechungsindexes der Linsen-Anordnung in ein Bild für ein linkes Auge und ein Bild für ein rechtes Auge aufteilt.

9. Herstellungsverfahren nach Anspruch 7 oder 8, wobei die BildanzeigeEinheit eine Matrix von Pixeln umfasst, und
ein Sub-Pixel für das Bild für das linke Auge und ein Sub-Pixel für das Bild für das rechte Auge abwechselnd in jedem der Pixel angeordnet sind.

10. Herstellungsverfahren nach einem der Ansprüche 7 bis 9, ferner umfassend:
Anhaften der Bildanzeige-Einheit (110) und der Berührungs-Sensierungs-Einheit (120) mit einer optisch klaren Haftschicht.

11. Herstellungsverfahren nach einem der Ansprüche 7 bis 10, ferner umfassend:
Anhaften einer Schutzschicht (130) an eine obere Fläche der Berührungs-Sensierungs-Einheit mit einer optisch klaren Haftschicht.

12. Herstellungsverfahren nach einem der Ansprüche 7 bis 11, wobei die erste transparente Elektrodenschicht (121) und die zweite transparente Elektrodenschicht (123) dazu angeordnet sind, einander zu kreuzen.

## Revendications

1. Appareil d'affichage d'images, comprenant:
une unité d'affichage d'image (110) comprenant une pluralité de pixels sous la forme d'une matrice, les pixels comprenant un sous-pixel pour l'oeil gauche et un sous-pixel pour l'oeil droit;
**caractérisé par**
une première couche transparente d'électrode (121) et une deuxième couche transparente d'électrode (123) positionnées sur l'unité d'affichage d'image (110), la première couche transparente d'électrode (121) et la deuxième couche transparente d'électrode (123) étant disposées de façon à se croiser mutuellement et étant conçues pour détecter au moins un toucher et une position de toucher; et
un ensemble de lentilles (122) disposé entre la première couche transparente d'électrode (121) et la deuxième couche transparente d'électrode (123), conçu pour séparer une sortie d'image de l'unité d'affichage d'image (110) en une image pour l'oeil gauche composée des sous-pixels pour l'oeil gauche et une image pour l'oeil droit composée des sous-pixels pour l'oeil droit sur base d'un indice de réfraction de l'ensemble de lentilles.

2. Appareil suivant la revendication 1, dans lequel la première couche d'électrode transparente (121), l'ensemble de lentilles (122) et la deuxième couche d'électrode transparente (123) forment ensemble une unité de détection de toucher (120) positionnée sur l'unité d'affichage d'image.

3. Appareil suivant la revendication 1 ou 2, dans lequel la première couche d'électrode transparente (121) adhère directement à une face inférieure de l'ensemble de lentilles (122) et une couche de protection (130) adhère à la deuxième couche d'électrode transparente (123).

4. Appareil suivant la revendication 1 ou 2, comprenant en outre:
une couche de protection (130) disposée sur une face de la deuxième couche d'électrode transparente (123) du côté opposé de la deuxième couche d'électrode transparente qui fait face à l'ensemble de lentilles (122);
une première couche adhésive optiquement transparente (141) adhère à la première couche d'électrode transparente et à l'unité d'affichage d'image; et
une deuxième couche adhésive optiquement transparente (142) adhère à la couche de protection (130) et à la deuxième couche d'électrode transparente (123).

5. Appareil suivant l'une des revendications 1 à 4, dans lequel l'ensemble de lentilles (122) comprend une lentille lenticulaire.

6. Appareil suivant l'une des revendications 2 à 5, dans lequel l'unité de détection de toucher (120) est attachable et détachable de l'unité d'affichage d'image (110).

7. Procédé de fabrication d'un appareil d'affichage d'une image stéréographique comprenant:
le dépôt d'un matériau conducteur transparent (124, 125) sur des faces opposées d'un ensemble de lentilles;
le dépôt d'une première couche d'électrode transparente (121) et d'une deuxième couche d'électrode transparente (123) par gravure du matériau conducteur transparent déposé sur l'ensemble de lentilles afin de générer une unité de détection de toucher; et
l'adhésion de l'unité de détection de toucher (120) à une unité d'affichage d'image (110).

8. Procédé de fabrication suivant la revendication 7, dans lequel l'ensemble de lentilles (122) comprend une lentille lenticulaire, qui sépare une sortie d'image de l'unité d'affichage d'image en une image pour l'oeil gauche et une image pour l'oeil droit sur base d'un indice de réfraction de l'ensemble de lentilles.

9. Procédé de fabrication suivant la revendication 7 ou 8, dans lequel l'unité d'affichage d'image comprend une matrice de pixels et
un sous-pixel pour l'image pour l'oeil gauche et un sous-pixel pour l'image pour l'oeil droit sont disposés en alternance dans chacun des pixels.

10. Procédé de fabrication selon l'une quelconque des revendications 7 à 9, comprenant en outre:
l'adhésion de l'unité d'affichage d'image (110) et de l'unité de détection de toucher (120) avec une couche adhésive optiquement transparente.

11. Procédé de fabrication selon l'une quelconque des revendications 7 à 10, comprenant en outre:
l'adhésion d'une couche de protection (130) à une surface supérieure de l'unité de détection de toucher avec une couche adhésive optiquement transparente.

12. Procédé de fabrication suivant l'une des revendications 7 à 11, dans lequel la première couche d'électrode transparente (121) et la deuxième couche d'électrode transparente (123) sont disposées de façon à se croiser mutuellement.
